Europäisches Patentamt

European Patent Office

Office européen des brevets

(11) Publication number: **0 070 886**
**B1**

## (12) EUROPEAN PATENT SPECIFICATION

(45) Date of publication of patent specification: **02.10.85**

(21) Application number: **82900848.1**

(22) Date of filing: **28.01.82**

(86) International application number:
**PCT/US82/00105**

(87) International publication number:
**WO 82/02531 05.08.82 Gazette 82/19**

(51) Int. Cl.⁴: **B 65 D 5/54**

(54) **EASY OPEN CARTON.**

(30) Priority: **29.01.81 US 230094**

(43) Date of publication of application:
**09.02.83 Bulletin 83/06**

(45) Publication of the grant of the patent:
**02.10.85 Bulletin 85/40**

(84) Designated Contracting States:
**BE CH DE FR GB LI SE**

(56) References cited:
**US-A-1 617 472**
**US-A-1 724 636**
**US-A-2 038 893**
**US-A-2 363 861**
**US-A-2 776 083**

**RESEARCH DISCLOSURE, no. 204, April 1981,
abstract no. 20427, HAVANT HAMPSHIRE (GB),
"Easy open carton"**

(73) Proprietor: **EASTMAN KODAK COMPANY
343 State Street
Rochester New York 14650 (US)**

(72) Inventor: **KINGSLEY, Richard T.
11 Corwin Road
Penfield, NY 14526 (US)**
Inventor: **SHERMAN, Larry
331 East Avenue
Macedon, NY 14502 (US)**

(74) Representative: **Baron, Paul Alexander Clifford
et al
Kodak Limited Patent Department Headstone
Drive
Harrow Middlesex HA1 4TY (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to cartons, and more particularly to cartons formed from blanks provided with tear lines for quick and convenient opening.

It is known to construct rectilinear cartons of folded and glued fibreboard or paper blanks which are formed with tear lines along predetermined paths. Such containers are disclosed in US—A—2155791 and 2363861. A carton disclosed in US—A—2038893 has one side wall which can be raised to open the carton when a single tear line, which extends between two corners of that wall across an adjacent wall, is severed. However, even after severing the tear line and raising the one side wall, the carton retains its box-like shape. Any customer information written on the inner surface of the carton could not be easily read.

The carton of this invention is an improvement over such cartons in that not only can one side wall of the carton be raised to open the carton when a single tear line, which extends between two corners of that wall across an adjacent wall, is severed, but additional tear lines enable the carton to be easily unfolded to give access to information printed on the interior of the carton.

In accordance with the present invention there is provided a carton comprising hingedly connected first to fourth rectangular side walls forming a sleeve, and end walls formed by first to sixth panels connected to said second to fourth rectangular side walls, a first tear line extending across the fourth side wall to the adjacent corners of the first side wall and the first side wall not being connected to either end wall, whereby when the first tear line is severed a portion of the fourth side wall is disengaged to allow the first side wall to be raised to provide access to the interior of the carton, characterised by second and third tear lines provided in the fourth side wall extending from the first tear line to the adjacent corners of the third side wall so that when the second and third tear lines are severed the carton can be unfolded.

Cartons of the type described herein are particularly adapted for packaging consumer articles which are accompanied by information such as a parts list, operating instructions, etc. printed on an enclosed sheet of paper. The carton of the present invention is adapted to provide the consumer with information printed on the interior of the carton so that the information is readily available and saves the cost of packing separate instructions or information sheets into the carton. One use for the carton is for holding a cassette of photographic film. Exposure setting information can be printed on the carton's interior walls.

In the detailed description of the preferred embodiment of the invention presented below, reference is made to the accompanying drawings in which:

Figure 1 is a plan view of the interior surface of a carton blank in accordance with the present invention;

Figure 2 is a perspective view of a carton assembled from the blank shown in Figure 1;

Figure 3 is a view of the carton of Figure 2 with the top side wall partially opened;

Figure 4 is a view of the carton of Figures 2 and 3 with the front open; and

Figure 5 is a plan view of the interior surface of the opened carton of Figures 2—4.

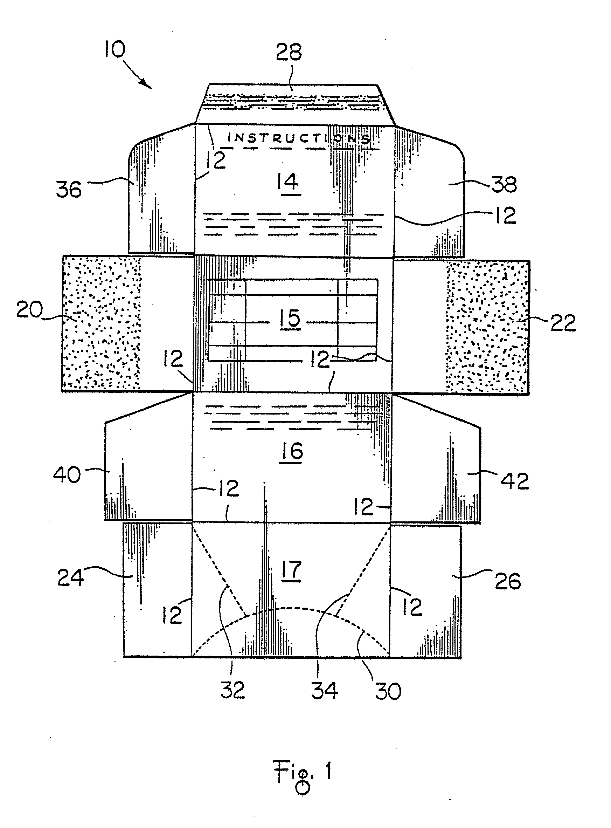

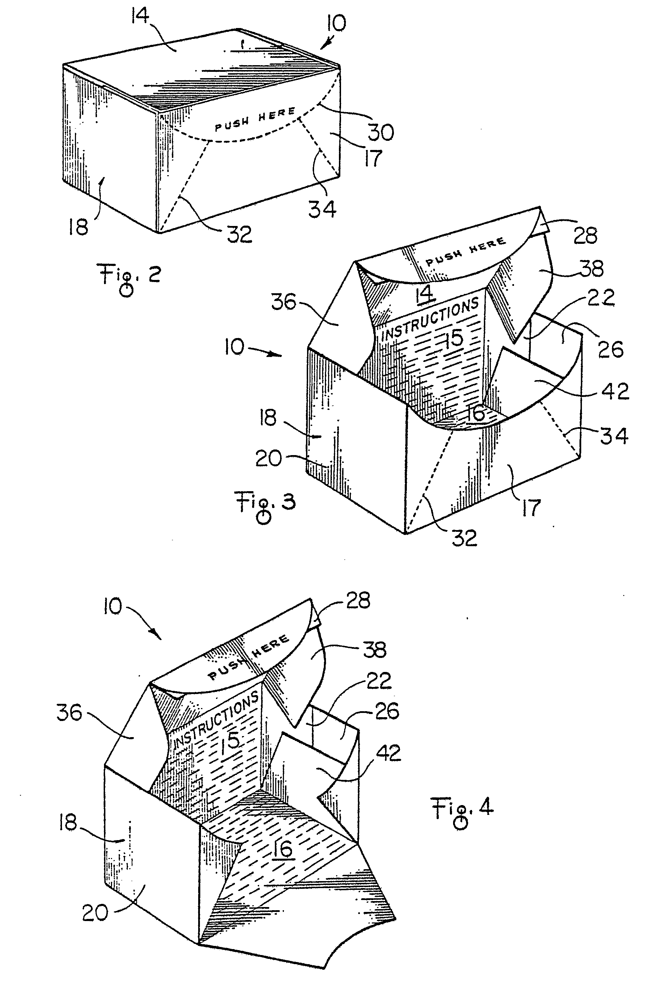

Figure 1 shows a suitable fibreboard or paper blank 10 which may be scored or perforated, and which has been cut to a desired shape to form the carton illustrated in Figure 2. Blank 10 has been scored or creased along lines 12 to form separate, hingedly connected panels which, when the blank is folded, form side walls and end walls of the carton.

In the present description of the carton, specific names have been applied to the side and end walls. However, it is to be understood that terms such as side, end, top, bottom, front, and back are used with respect to the particular orientation illustrated and may apply to any wall area. Accordingly, hingedly connected rectangular walls 14, 15, 16 and 17 will be referred to respectively as the top, rear, bottom and front walls of the carton and will be collectively referred to as the side walls. In like manner, wall 18, shown in Figure 2, and its opposed wall (not shown) will be referred to as the end walls of the carton.

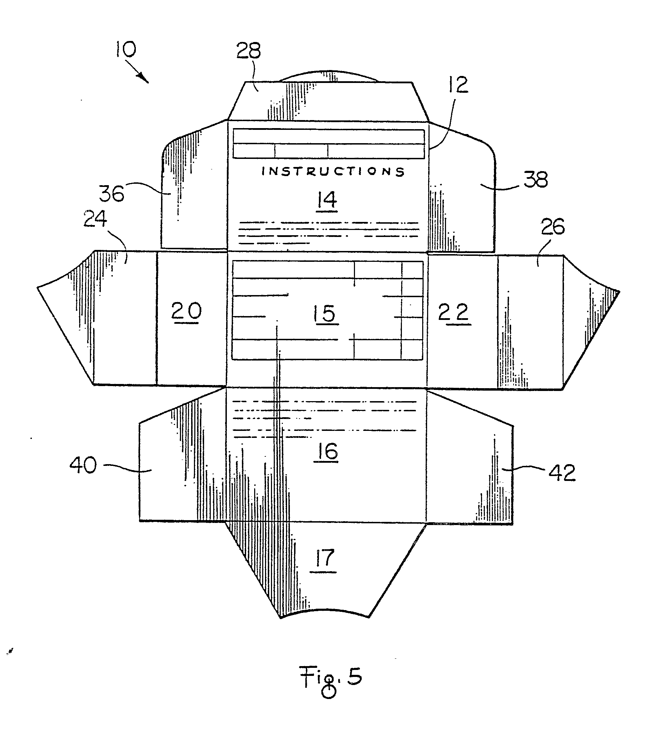

Each side wall 14—17 has a plurality of panels hingedly connected thereto. Panels 20, 22, 24, 26, 40 and 42, which extend laterally from the side walls as viewed in Figure 1, will, when the carton is assembled, form the carton's end walls 18. Panels 20 and 22 are partially coated with a suitable adhesive, which is placed on a portion of panels 20 and 22 on the interior of blank 10 so as to adhere, on assembly of the carton, to panels 24 and 26, as seen in Figure 5. A panel 28 carries adhesive on the exterior of blank 10 and underlies a portion of front wall 17 when the carton is assembled.

To enable easy access to the contents of the carton, suitable lines of weakness, or tear lines, are provided in front wall 17 by, for example, perforating the blank. Such lines of weakness include a first tear line 30 and second tear lines 32 and 34. Tear line 30 extends across front wall 17 to the adjacent two corners of top wall 14, as shown in Figure 2 when the carton is assembled. Tear lines 32 and 34 extend from tear line 30 to the adjacent two corners of bottom wall 16.

Once assembled, the carton may be readily opened by pushing on the region at the top of front wall 17 to sever it at tear line 30, and then lifting top wall 14 to the position shown in Figure 3. Since top wall 14 is not connected to either of the end walls except by non-adhered panels 36 and 38, and is hingedly connected only to rear wall 15, the top wall 14 can be fully opened to remove the contents of the carton.

As mentioned hereinbefore, the carton may be adapted to provide information useful to the consumer. Such information is printed on the interior surface of blank 10, and access to it is provided by severing tear lines 32 and 34 to permit unfolding front wall 17 as shown in Figure 4. Since bottom wall 16 is not connected to either end wall except by non-adhered panels 40 and 42, the bottom wall 16 can be unfolded so that the carton blank can lie flat as shown in Figure 5. Any information printed on the interior of the carton's blank is readily available to the consumer.

**Claims**

1. A carton comprising hingedly connected first to fourth rectangular side walls (14, 15, 16, 17) forming a sleeve, and end walls (18) formed by first to sixth panels (20, 40, 24; 22, 42, 26) connected to said second to fourth rectangular side walls (15, 16, 17), a first tear line (30) extending across the fourth side wall (17) to the adjacent corners of the first side wall (14) and the first side wall (14) not being connected to either end wall (18), whereby when the first tear line (30) is severed a portion of the fourth side wall (17) is disengaged to allow the first side wall (14) to be raised to provide access to the interior of the carton, characterised by second and third tear lines (32, 34) provided in the fourth side wall (17) extending from the first tear line (30) to the adjacent corners of the third side wall (16) so that when the second and third tear lines (32, 34) are severed the carton can be unfolded.

2. A carton according to claim 1 wherein a portion of the fourth side wall (17) is adhesively connected to a seventh panel (28) extending from the first side wall (14).

3. A carton according to claim 1 or 2 wherein the first and second panels (20, 22) are partially coated with adhesive to adhere to the third and fourth panels (24, 26), respectively.

4. A carton according to claim 1, 2 or 3 wherein the third side wall (16) is connected to said end walls (18) but only to said fifth and sixth panels (40, 42) of said end walls (18) that are not adhered to the remaining panels (20, 22, 24, 26) of said end walls (18), to permit the carton to be unfolded to expose the interior of the carton.

5. A carton according to any one of the preceding claims wherein information is printed on the interior of said carton.

**Revendications**

1. Emballage comprenant des première à quatrième parois latérales rectangulaires reliées par articulation (14, 15, 16, 17) formant un manchon, et des parois extrêmales (18), formées de six panneaux (20, 40, 24; 22, 42, 26) reliés à ces deuxième à quatrième parois latérales rectangulaires (15, 16, 17), une première ligne de moindre résistance (30) s'étendant au travers de la quatrième paroi latérale (17) vers les angles voisins de la première paroi latérale (14) qui n'est connectée à aucune des parois extrêmales (18), de manière que lorsque la première ligne de moindre résistance (30) est rompue une partie de la quatrième paroi latérale (17) est disjointe pour permettre à la première paroi latérale (14) d'être soulevée afin de donner accès à l'intérieur de l'emballage, caractérisé par des deuxième et troisième lignes de moindre résistance (32, 34), ménagées sur la quatrième paroi latérale (17) et s'étendant de la première ligne de moindre résistance (30) aux angles voisins de la troisième paroi latérale (16) de manière que lorsque ces deuxième et troisième lignes de moindre résistance (32, 34) sont rompues l'emballage peut être déplié.

2. Emballage conforme à la revendication 1 où une partie de la quatrième paroi latérale (17) est fixée par adhésif à un septième panneau (28) s'étendant à partir de la première paroi latérale (14).

3. Emballage conforme à la revendication 1 ou 2 où les premier et deuxième panneaux (20, 22) sont enduits partiellement d'un adhésif pour adhérer aux troisième et quatrième panneux (22, 26), respectivement.

4. Emballage conforme à la revendication 1, 2 ou 3 où la troisième paroi latérale (16) est reliée à ces parois extrêmales (18) mais seulement à ces cinquième et sixième panneaux (40, 42) de ces parois extrêmales (18) qui ne sont pas collés aux panneaux restant (20, 22, 24, 26) de ces parois extrêmales (18) pour permettre à l'emballage d'être déplié afin d'en exposer la face intérieure.

5. Emballage conforme à l'une quelconque des revendications qui précèdent où des informations sont imprimées sur l'intérieur de cet emballage.

**Patentansprüche**

1. Faltschachtel mit vier gelenkig miteinander verbundenen rechteckförmigen Hauptwänden (14, 15, 16, 17), die eine Hülle bilden, und mit Seitenwänden (18), die durch sechs Verlängerungsabschnitte (20, 40, 24; 22, 42, 26) gebildet werden, welche mit der zweiten bis vierten der rechteckförmigen Hauptwände (15, 16, 17) verbunden sind, mit einer ersten Einreißlinie (30), die sich über die vierte Hauptwand (17) hinweg bis zu den benachbarten Ecken der ersten Hauptwand (14) erstreckt, wobei die erste Hauptwand (14) mit keiner der Seitenwände (18) verbunden ist und wobei beim Aufreißen der ersten Einreißlinie (30) ein Teil der vierten Hauptwand (17) so gelöst wird, daß dadurch die erste Hauptwand (14) aufgerichtet werden kann, um das Innere der Schachtel zugängliche zu machen, gekennzeichnet durch eine zweite und eine dritte Einreißlinie (32, 34), die in der vierten Hauptwand (17) vorgesehen sind und sich von der ersten Einreißlinie (30) aus bis zu den benachbarten Ecken der dritten Hauptwand (16) erstrecken, so daß beim Aufreißen der zweiten und der dritten Einreißlinie (32, 34) die Faltschachtel auseinandergeklappt werden kann.

2. Faltschachtel nach Anspruch 1, dadurch gekennzeichnet, daß ein Teil der vierten Hauptwand (17) mit einem aus der ersten Hauptwand (14) herausragenden siebten Verlängerungsabschnitt (28) verklebt ist.

3. Faltschachtel nach Anspruch 1 oder 2, dadurch gekennzeichnet, daß der erste und der zweite Verlängerungsabschnitt (20, 22) teilweise mit einem Klebemittel beschichtet sind und an dem dritten bzw. dem vierten Verlängerungsabschnitt (24, 26) haften.

4. Faltschachtel nach Anspruch 1, 2 oder 3, dadurch gekennzeichnet, daß die dritte Hauptwand (16) mit den Seitenwänden (18) verbunden ist, jedoch nur durch die nicht an den übrigen Verlängerungsabschnitten (20, 22, 24, 26) der Seitenwände (18) haftenden fünften und sechsten Verlängerungsabschnitte (40, 42) der Seitenwände (18), so daß die Faltschachtel auseinandergeklappt und das Innere der Schachtel zugänglich gemacht werden kann.

5. Faltschachtel nach einem der vorhergehenden Ansprüche, dadurch gekennzeichnet, daß das Innere der Faltschachtel mit Informationen bedruckt ist.

INSTRUCTIONS

Fig. 1

1

Fig. 2

Fig. 3

Fig. 4

Fig. 5